# EUROPEAN PATENT SPECIFICATION

(11) **EP 3 369 980 B1**
(45) Date of publication and mention of the grant of the patent: **10.11.2021**
(21) Application number: 18158747.8
(22) Date of filing: 27.02.2018
(51) Int. Cl.: F16L 29/02, F16L 37/38, F16L 37/40, F16L 37/46, F16F 9/34

(54) **RESIDUAL PRESSURE SEALING VALVE FOR PNEUMATIC SUSPENSIONS OF MOTOR VEHICLES**
ABDICHTVENTIL FÜR RESTDRUCK IN PNEUMATISCHEN FEDERUNGEN VON FAHRZEUGEN
VALVE ÉTANCHE POUR PRESSION RÉSIDUELLE DE SUPSENSION PNEUMATIQUES DE VÉHICULES

(30) Priority: 01.03.2017 IT 201700023100
(43) Date of publication of application: 05.09.2018
(73) Proprietor: Wonder S.p.A., 26100 Cremona (IT)
(72) Inventor: CAPELLI, Andrea, 26100 Cremona (IT); CAZZANTI, Stefano, 26100 Cremona (IT); COTTARELLI, Maurizio, 26100 Cremona (IT); FOGLIA, Gabriele, 26100 Cremona (IT); PERSICO, Stefano, 26100 Cremona (IT)
(74) Representative: Gualeni, Nadia

(56) References cited:
- US-A- 2 842 382
- US-A- 3 825 222
- US-A1- 2005 247 371

## Description

The present invention relates to a residual pressure sealing valve for a pneumatic suspension for motor vehicles, in particular motor vehicles, light or heavy trucks, buses.

In the automotive sector is known the use of pneumatic suspension systems equipped with special bellows, used as elastic constructive elements between the axle and the body of the vehicle. These bellows have the function of bearing the required pressure in the volume of the bellows depending on the load condition of the motor vehicle.

During production, the bellows are pre-filled to a certain inflation pressure, for example 4 bar, and the residual pressure seal valve is used to seal the bellows. Such valve must ensure that the correct inflation pressure is maintained inside the bellows during transport and storage for mounting on the vehicle and that the bellows are prevented from deflating and thus permanently damaging the rubber walls thereof. Once the bellows have been mounted in position, a special compressed air hose is inserted into the valve, causing it to open, and the air suspension system is filled to the desired pressure, about 8 bar. During normal vehicle operation, the residual pressure sealing valve remains always open.

The operation of inserting the compressed air hose into the valve to cause it to open is carried out manually by the operator in charge of mounting the bellows. In known valves, the thrust force needed to completely open the valve is quite high, even up to 100 N. This makes mounting the bellows difficult and complex.

Moreover, in such known valves, the immediate and proper tight seal of the compressed air hose is not always guaranteed. This may compromise the seal, risking pressure losses. Examples of sealing valves are disclosed in documents US 2 842 382 and US 2005 / 247371

Therefore, in the field of residual pressure sealing valves for pneumatic suspensions, the need is felt to have highly reliable valves with simple and quick mounting.

Such requirement is satisfied by a residual pressure sealing valve according to claim 1. Other embodiments of the second valve of the invention are described in the subsequent dependent claims.

Further features and advantages of the present invention will become more understandable from the following description of a preferred and non-limiting embodiment thereof, wherein:
- figure 1 shows a sectional view of a residual pressure sealing valve according to the present invention, closed before use;
- figure 2 shows a sectional view of the valve of figure 1, during the insertion of the compressed air hose, still completely closed;
- figure 3 shows a sectional view of the valve of figure 1, during the insertion of the compressed air hose, completely open;

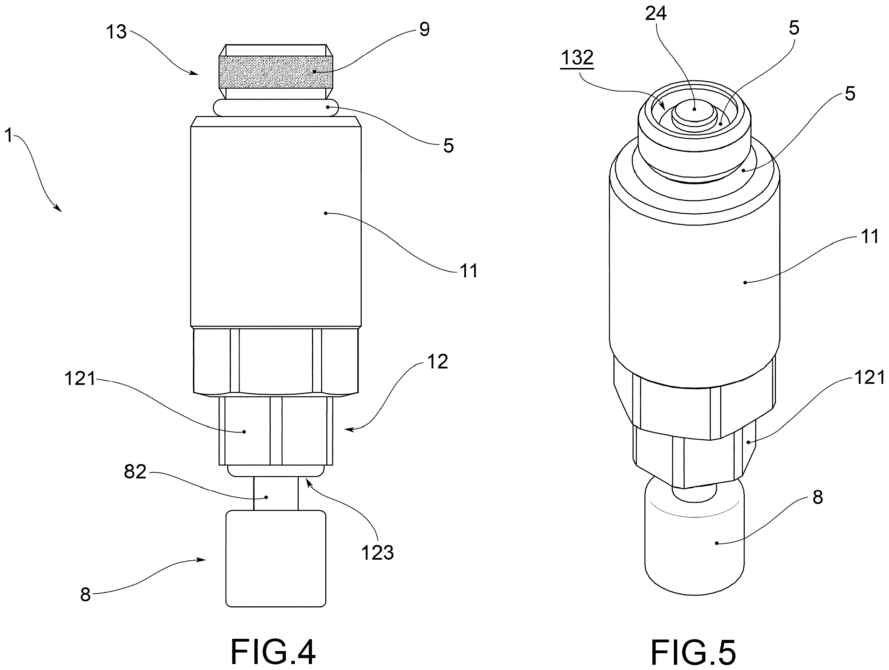

- figures 4 and 5 respectively show a front view and an axonometric view of the valve of figure 1.

In the above figures, the same or similar elements are indicated at the same numerical references.

With reference to the above figures, collectively indicated at 1 is a residual pressure sealing valve (hereinafter referred to as valve 1) according to the present invention.

The valve 1 comprises a substantially cylindrical valve body 11, provided with a connection end 12, designed to provide a sealed connection with a compressed air hose T and a coupling end 13, designed to sealingly connect with a pneumatic suspension, and in particular with bellows (not shown).

The valve 1 is provided, both at the connection end 12 and at the coupling end 13, with at least one sealing ring 5, for example an O-ring.

In particular, the connection end 12 comprises a substantially cylindrical connection body 121, provided with an input channel 122 (longitudinal) inside of which the compressed air hose T is inserted, housed and retained.

Inside the input channel 122, close to the input mouth 123, there is at least one sealing ring 5, housed in a specially provided seat 51.

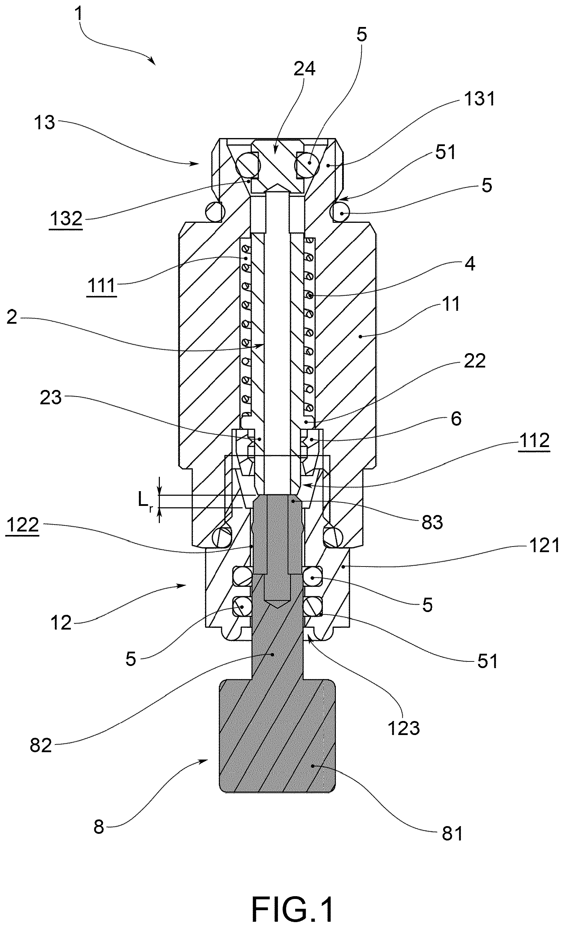

In a further variant embodiment, shown in figure 1, the connection body 121 is an element distinct from the valve body 11 (i.e., a connector), sealingly engaged with the valve body 11, for example by screwing and interposing at least one sealing ring 5.

The coupling end 13 comprises a substantially cylindrical coupling body 131, provided with a coupling channel 132 (longitudinal) adapted to enter in fluidic connection with the pneumatic suspension.

Outside the coupling body 131 there is at least one sealing ring 5, housed in a specially provided seat 51.

In a variant embodiment shown in figure 1, the coupling body 131 is made in one piece with the valve body 11.

In a further variant embodiment, the coupling body 131 is an element distinct from the valve body 11, sealingly engaged with the valve body 11, for example by screwing and interposing at least one sealing ring 5.

The valve body 11 is internally provided with a connection channel 111 suitable to connect fluidically the compressed air hose T and the pneumatic suspension.

The valve body 11 slidably houses inside the connection channel 111 an actuator 2 (e.g., a pin) adapted to open and close the valve 1, i.e., open and close the connection channel 111 to allow or interrupt the fluidic connection between the compressed air hose T and the pneumatic suspension.

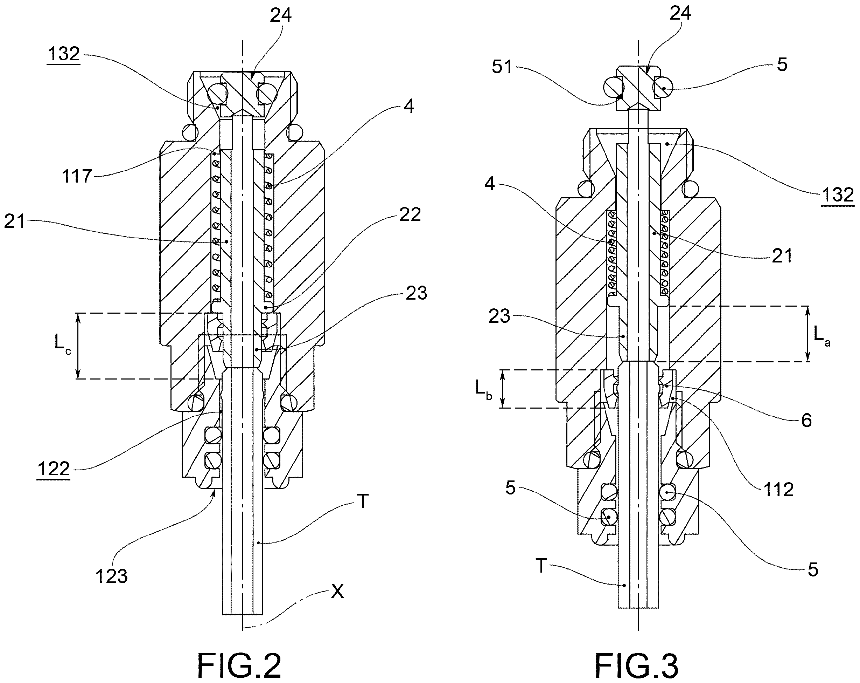

Figure 2 shows the valve 1 completely closed, where the actuator 2 interrupts the fluidic connection between the compressed air hose T and the pneumatic suspension.

Figure 3 shows the valve 1 completely open, where the actuator 2 allows the fluidic connection between the compressed air hose T and the pneumatic suspension.

The actuator 2 is provided with an actuator body 21 comprising, at the upper end, a sealing element 24, adapted to seal tight the connection channel 111, and in particular the coupling channel 132.

Preferably, the sealing element 24 is provided with at least one sealing ring 5, housed in a specially provided seat 51.

The actuator 2 is provided with, in the variant embodiment of figure 1, an abutment element 22 made in one piece with the actuator 2 and adapted to provide a resting and abutment point for return means 4, housed within the connection channel 111 (for example a spring), adapted to keep the valve 1 in the closed configuration, i.e., the sealing element 24 abutting against the walls of the coupling channel 132 (as shown in figures 1 and 2) .

The connection channel 111 further defines, at the connection end 12, a chamber 112 adapted to house a grip ring 6 adapted to engage and grasp the upper end of the compressed air hose T to keep it in the fully open position of the valve 1, as shown in figure 3.

In the variant embodiment considered, such ring 6 is an incomplete toric element, a device suitable to guarantee its elasticity.

The connection body 121 and the grip ring 6 define a quick-fit connection system to sealingly retain the upper end of the compressed air hose T, as shown in figure 3.

Advantageously, the actuator 2 is provided with, on the opposite side with respect to the sealing element 24, a tail 23, preferably cylindrical.

The tail 23 extends beyond, or below, the abutment element 22.

The tail 23 extends inside the chamber 112 of the grip ring 6.

The grip ring 6 is fitted in contact on the tail 23.

Preferably, the tail 23 extends for almost the entire length of the chamber 112. The grip ring 6 slides along the tail 23 without the risk of being dislodged by the same tail.

That is, if Lc is the length of the chamber 112, La is the length of the tail 23, Lb is the length of the grip ring 6; Lr is the residual length (defined as Lr = Lc-La); the residual length Lr is less than the length of the grip ring 6 (i.e., Lr <Lb).

Advantageously, therefore, the grip ring 6 is always kept in position along the longitudinal axis X of the valve 1, thus eliminating any risk of misalignment of the grip ring 6 with respect to the axis X and the hose T. Such guarantee of alignment translates into a proper guarantee of a tight seal of the compressed air hose T (the hose that is inserted in the valve 1 along the X axis), minimizing the risk of pressure loss and an inability to mount due to interference between the hose T and the grip ring 6.

In the closed configuration of the valve 1 wherein the actuator 2 is completely retracted (as shown in figure 2), the grip ring 6 is fitted on the tail 23 and in abutment or in close proximity with the abutment element 22.

In the closed configuration of the valve 1 wherein the actuator 2 is completely retracted (as shown in figure 2), the tail 23 extends beyond, i.e., protrudes beyond, the grip ring 6.

Figure 1 shows the residual pressure sealing valve 1 closed before use: the actuator 2 is completely retracted, the sealing element 24 seals tight the coupling channel 132, the grip ring 6 is fitted on the tail 23, the tail 23 protrudes beyond the grip ring 6.

Preferably, the valve 1 is provided with a safety accessory, i.e., a plug 8, which prevents contamination of the inside of the valve during transport and storage.

The plug comprises a plug body 81 and a grip portion 82.

Before assembly on the vehicle, the plug 8 is inserted inside the valve 1 at the connection end 12, closing the input channel 122 and protecting the input mouth 123. In particular, the plug body 81 is inserted inside the input channel 122 until the distal end 83 thereof abuts against the distal end 231 of the tail 23 of the actuator 21.

Figure 2 shows the valve 1 wherein the plug 8 has been removed and in its place the compressed air hose T has been inserted at least partially.

The hose T is inserted inside the input channel 122 until its distal end abuts against the distal end 231 of the tail 23 of the actuator 21: the valve 1 is still completely closed (the sealing element 24 seals tight the coupling channel 132), i.e., the fluidic connection between the compressed air hose T and the pneumatic suspension is prevented.

By further pushing the hose T inside the valve 1, with a force greater than the thrust force exerted by the return means 4, the shutter is lifted, or pushed in the direction of the coupling end 13, until causing the sealing element 24 to lift, which, by separating from the walls of the coupling channel 132, causes the valve 1 to open (as shown in figure 3), i.e., the connection channel 111 opens to allow the fluidic connection between the compressed air hose T and the pneumatic suspension.

Advantageously, the compressed air hose T abuts against the actuator 2 before coming into contact with the grip ring 6.

Advantageously, the presence of the tail 23 of the actuator 21 allows the thrust force necessary to completely open the valve 1 to be reduced. Comparative tests carried out between the valve 1 according to the invention and a known valve with tailless actuator have shown that such thrust force is equal to about 100 N in the known valve, while it decreases to about 60 N in the valve 1 according to the invention. Such reduction, equal to 40%, of the thrust force facilitates the operation of inserting the compressed air hose T in the valve 1 to cause it to open, an operation which is carried out manually by the operator in charge of assembling the bellows. This reduction facilitates insertion in the case of small-diameter hoses T that are more difficult to grasp and push during manual mounting.

Preferably, moreover, the valve 1 comprises a friction portion 13 at the outer surface of the coupling end 13 intended to sealingly engage with the pneumatic suspension, and in particular with the bellows. In one embodiment, the friction portion 13 is obtained by applying a thread-lock-type coating 9, or by means of a thread-lock surface treatment.

Innovatively, a residual pressure sealing valve for pneumatic suspensions in accordance with the present invention is highly reliable and easy to assemble.

Advantageously, a residual pressure sealing valve according to the present invention allows the thrust force necessary to open it completely to be considerably reduced.

Advantageously, a residual pressure sealing valve in accordance with the present invention, provided with an actuator elongated rearwardly (i.e., provided with tail 23) allows the abutment between the compressed air hose and the actuator to be brought forward, facilitating the opening operation.

Advantageously, a residual pressure sealing valve in accordance with the present invention, being provided with a rearwardly elongated actuator, allows the grip ring to be held in position, ensuring the fast and proper tight seal of the compressed air hose.

A person skilled in the art, in the object of satisfying contingent and specific requirements, may make numerous modifications and variations to the valve described above, all of which are within the scope of the invention as defined by the following claims.

## Claims

1. Residual pressure sealing valve (1) for pneumatic suspensions of motor vehicles, comprising:
- a valve body (11) provided with a connection end (12) suitable to make a tight connection with a compressed air hose, a coupling end (13) suitable to make a tight connection with a pneumatic suspension, and a connection channel (111) suitable to make a fluidic connection between the connection end (12) and the coupling end (13) ;
- an actuator (2), slidingly housed in the connection channel (111) suitable to open and close the connection channel (111) to allow or obstruct the fluidic connection between the connection end (12) and the coupling end (13) ;
- return means (4) suitable to keep the actuator (2) in a closed configuration of the connection channel (111);
- a grip ring (6), housed in a chamber (112) defined inside the connection channel (111) suitable to grasp and retain the compressed air hose;
**characterized in that** the actuator (2) is provided with a tail (23) and, in the closed configuration, the grip ring (6) is fitted in sliding contact on the tail (23).

2. Valve (1) according to claim 1, wherein the tail (23) extends under the grip ring (6).

3. Valve (1) according to claim 1 or 2, wherein the tail (23) extends inside the chamber (112).

4. Valve (1) according to any of the preceding claims, wherein the tail (23) extends for almost the entire length of the chamber (112).

5. Valve (1) according to any of the preceding claims, wherein the actuator (2) is fitted with an actuator body (21) comprising, on the opposite side to the tail (23), a sealing element (24) suitable to seal tight the connection channel (111).

6. Valve (1) according to any of the preceding claims, wherein the actuator (2) has an abutment element (22) suitable to provide a point of abutment for return means (4) .

7. Valve (1) according to claim 6, wherein the tail (23) extends under the abutment element (22).

8. Valve (1) according to any of the preceding claims, wherein the connection end (12) comprises a connection body (121) fitted with an input channel (122), said connection body (121) being a separate element from the valve body (11) and sealingly engaged therewith.

9. Valve (1) according to any of the preceding claims, comprising, at the outer surface of the coupling end (13), a friction portion (9) obtained by a coating of the thread-lock type, or by a thread-lock surface treatment.

## Patentansprüche

1. Restdruck-Dichtventil (1) für pneumatische Federungen bzw. Luftfederungen von Kraftfahrzeugen, umfassend:
- einen Ventilkörper (11), versehen mit einem Verbindungsende (12), das geeignet ist, eine dichte Verbindung mit einem Druckluftschlauch herzustellen, einem Kopplungsende (13), das geeignet ist, eine dichte Verbindung mit einer pneumatischen Federung bzw. Luftfederung herzustellen, und einem Verbindungskanal (111), der geeignet ist, eine Fluidverbindung zwischen dem Verbindungsende (12) und dem Kopplungsende (13) herzustellen;
- einen Aktor (2), gleitend bzw. verschiebbar in dem Verbindungskanal (111) untergebracht, der geeignet ist, den Verbindungskanal (111) zu öffnen und zu schließen, um die Fluidverbindung zwischen dem Verbindungsende (12) und dem Kopplungsende (13) zu erlauben oder zu blockieren;
- Rückstellmittel (4), die geeignet sind, den Aktor (2) in einer geschlossenen Konfiguration des Verbindungskanals (111) zu halten;
- einen Greifring (6), untergebracht in einer innerhalb des Verbindungskanals (111) definierten Kammer (112), der geeignet ist, den Druckluftschlauch zu greifen und zu halten;
**dadurch gekennzeichnet, dass** der Aktor (2) mit einem Endstück bzw. Hinterteil (23) versehen ist und, in der geschlossenen Konfiguration, der Greifring (6) in Gleitkontakt auf den Hinterteil (23) gepasst ist.

2. Ventil (1) nach Anspruch 1, wobei sich der Hinterteil (23) unter dem Griffring (6) erstreckt.

3. Ventil (1) nach Anspruch 1 oder 2, wobei sich der Hinterteil (23) innerhalb der Kammer (112) erstreckt.

4. Ventil (1) nach einem der vorhergehenden Ansprüche, wobei sich der Hinterteil (23) nahezu über die gesamte Länge der Kammer (112) erstreckt.

5. Ventil (1) nach einem der vorhergehenden Ansprüche, wobei der Aktor (2) mit einem Aktorkörper (21) versehen ist, der auf der dem Hinterteil (23) gegenüberliegenden bzw. entgegengesetzten Seite ein Dichtelement (24) umfasst, das geeignet ist, den Verbindungskanal (111) dicht abzudichten.

6. Ventil (1) nach einem der vorhergehenden Ansprüche, wobei der Aktor (2) ein Anlageelement (22) aufweist, das geeignet ist, einen Anlagepunkt für die Rückstellmittel (4) bereitzustellen.

7. Ventil (1) nach Anspruch 6, wobei sich der Hinterteil (23) unter dem Anlageelement (22) erstreckt.

8. Ventil (1) nach einem der vorhergehenden Ansprüche, wobei das Verbindungsende (12) einen Verbindungskörper (121) umfasst, der mit einem Eingangskanal (122) versehen ist, wobei der Verbindungskörper (121) ein von dem Ventilkörper (11) separates Element ist und dichtend mit diesem in Eingriff ist.

9. Ventil (1) nach einem der vorhergehenden Ansprüche, umfassend, an der äußeren Fläche bzw. Oberfläche des Kopplungsendes (13), einen Reibungsabschnitt (9), der durch eine Beschichtung vom Thread-Lock- bzw. Gewindesicherungstyp oder durch eine Thread-Lock- bzw. Gewindesicherung-Oberflächenbehandlung erhalten wird.

## Revendications

1. Valve (1) étanche pour pression résiduelle de suspensions pneumatiques de véhicules à moteur, comprenant :
- un corps de valve (11) pourvu d'une extrémité de liaison (12) appropriée pour réaliser une liaison hermétique avec un tuyau d'air comprimé, d'une extrémité d'accouplement (13) appropriée pour réaliser une liaison hermétique avec une suspension pneumatique, et d'un canal de liaison (111) approprié pour réaliser une liaison fluidique entre l'extrémité de liaison (12) et l'extrémité d'accouplement (13) ;
- un actionneur (2), logé de manière coulissante dans le canal de liaison (111) approprié pour ouvrir et fermer le canal de liaison (111) pour permettre ou entraver la liaison fluidique entre l'extrémité de liaison (12) et l'extrémité d'accouplement (13) ;
- des moyens de retour (4) appropriés pour maintenir l'actionneur (2) dans une configuration fermée du canal de liaison (111) ;
- un anneau de serrage (6), logé dans une chambre (112) définie à l'intérieur du canal de liaison (111) approprié pour saisir et retenir le tuyau d'air comprimé ;
**caractérisée en ce que** l'actionneur (2) est pourvu d'une queue (23) et, dans la configuration fermée, l'anneau de serrage (6) est placé en contact coulissant sur la queue (23).

2. Valve (1) selon la revendication 1, dans laquelle la queue (23) s'étend sous l'anneau de serrage (6).

3. Valve (1) selon la revendication 1 ou 2, dans laquelle la queue (23) s'étend à l'intérieur de la chambre (112).

4. Valve (1) selon l'une quelconque des revendications précédentes, dans laquelle la queue (23) s'étend sur presque toute la longueur de la chambre (112).

5. Valve (1) selon l'une quelconque des revendications précédentes, dans laquelle l'actionneur (2) est équipé d'un corps d'actionneur (21) comprenant, sur le côté opposé à la queue (23), un élément étanche (24) approprié pour étanchéifier hermétiquement le canal de liaison (111).

6. Valve (1) selon l'une quelconque des revendications précédentes, dans laquelle l'actionneur (2) a un élément de butée (22) approprié pour fournir un point de butée pour des moyens de retour (4).

7. Valve (1) selon la revendication 6, dans laquelle la queue (23) s'étend sous l'élément de butée (22).

8. Valve (1) selon l'une quelconque des revendications précédentes, dans laquelle l'extrémité de liaison (12) comprend un corps de liaison (121) équipé d'un canal d'entrée (122), ledit corps de liaison (121) étant un élément séparé du corps de valve (11) et en prise de manière étanche avec celui-ci.

9. Valve (1) selon l'une quelconque des revendications précédentes, comprenant, au niveau de la surface extérieure de l'extrémité d'accouplement (13), une portion de frottement (9) obtenue par un revêtement du type frein filet, ou par un traitement de surface à frein filet.
